(19) Europäisches Patentamt
European Patent Office
Office européen des brevets

(11) **EP 2 993 448 A1**

(12) **EUROPÄISCHE PATENTANMELDUNG**

(43) Veröffentlichungstag:
09.03.2016 Patentblatt 2016/10

(51) Int Cl.:
*G01F 23/292* (2006.01)

(21) Anmeldenummer: **15182651.8**

(22) Anmeldetag: **27.08.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **05.09.2014 DE 102014217840**

(71) Anmelder: **BSH Hausgeräte GmbH**
**81739 München (DE)**

(72) Erfinder:
• **Tracy, Timothy Mark**
**83361 Kienberg (DE)**
• **Mathes, Anton**
**83364 Neukirchen am Teisenberg (DE)**
• **Beck, Rudolf**
**84518 Garching a. d. Alz (DE)**
• **Wrehde, Stefan**
**83365 Nußdorf (DE)**

(54) **GETRÄNKESPENDER MIT EINER FÜLLSTANDSERMITTLUNG UND VERFAHREN ZUM BETREIBEN DES GETRÄNKESPENDERS**

(57) Die Erfindung betrifft einen Getränkespender mit einer Einrichtung zur Ermittlung eines Getränkefüllstands, mit einem Getränkeauslass (12), mit einer horizontalen Aufstellfläche (14), die unterhalb des Getränkeauslasses (12) in einer x-y-Ebene eines Koordinatensystems angeordnet ist, mit einem Sender (20), der eine Gerade in die x-y-Ebene der Aufstellfläche (14) projiziert, mit einem Empfänger (24), der unter einem Winkel ($\varphi$) auf die Aufstellfläche (14) gerichtet ist und der Wiedergabeabschnitte (30; 32) der projizierten Gerade sowohl auf der Aufstellfläche (14) als auch solche Wiedergabeabschnitte (31; 33; 34; 35) erfasst, die denen gegenüber in darüber liegenden parallelen Ebenen um einen Abstand ($\Delta e$) parallel verschoben erscheinen, und mit einer Auswerteeinheit, die den Abstand ($\Delta e$) zwischen den von dem Empfänger (24) erfassten Wiedergabeabschnitten (30; 31; 32; 33; 34; 35) ermittelt und daraus einen Abstand ($\Delta z$) zwischen den Ebenen in Richtung der z-Achse bestimmt. Die Erfindung betrifft außerdem ein Verfahren zum Betrieb des Getränkespenders.

Figur 1

EP 2 993 448 A1

**Beschreibung**

Die Erfindung betrifft einen Getränkespender mit einer Einrichtung zur Ermittlung eines Getränkefüllstandes, insbesondere einer Heißgetränkezubereitungseinrichtung für Haushaltszwecke wie beispielsweise eines Kaffeevollautomaten.

Abfüllungssysteme, insbesondere für Getränke, sind in der Regel auf das Abfüllen von Zielbehältern mit einem definierten Volumen ausgelegt. Speziell Getränkespender für den Hausgebrauch, beispielsweise Kaffeevollautomaten, stellen oft selbst keine Trinkgefäße als Zielbehälter zur Verfügung. Sie bieten bei komfortablen Ausführungen eine möglichst berührungsfreie Mengendetektion, um einerseits das Überlaufen eines zu befüllenden Getränkegefäßes zu vermeiden und andererseits die Gefahr einer Kontamination über das Detektionssystem selbst auszuschließen. Diese Systeme arbeiten daher in der Regel auf optischer Basis. Speziell im Bereich der Heißgetränkezubereitungseinrichtungen leidet die Genauigkeit optischer Systeme jedoch an der Dampfbildung, die die Zubereitung von Heißgetränken in der Regel begleitet. Die Auswertung einer Bildinformation wird dabei durch Verschleierung erschwert.

Die EP 2 281 773 B1 beschreibt eine Vorrichtung und ein Verfahren zur Nachfüllsteuerung eines Getränkebehälters für einen Getränkespender. Sie umfasst neben einer Einrichtung zum Befüllen eines Behälters mit Flüssigkeit eine Steuereinrichtung, die das Anhalten der Fülleinrichtung steuern kann, eine Sichtmarkierungseinrichtung zum Markieren eines Flüssigkeitsfüllstandes im Behälter, eine Einrichtung, die ein Signal in Richtung des Behälters aussendet und eine Empfangseinrichtung für ein Einfallssignal, die das von dem Behälter zurückkommende Einfallssignal empfängt. Die Empfangseinrichtung weist dazu eine Reihe fotoelektrischer Empfänger auf, die in der Lage sind, eine Verschiebung des Einfallssignals zu erfassen. Die zuverlässige Funktion der bekannten Einrichtung wird jedoch maßgeblich von der korrekten Position der Tasse unter der Erfassungseinrichtung bestimmt. Greift der Benutzer nicht gegebenenfalls korrigierend ein, kann es zu Fehlfunktionen kommen.

Aufgabe der Erfindung ist es daher, einen Getränkespender mit einer Einrichtung zur Ermittlung des Getränkefüllstandes anzugeben, der zuverlässig und möglichst ohne gegebenenfalls korrigierenden Eingriff des Benutzers funktioniert.

Diese Aufgabe wird von einem Getränkespender mit den Merkmalen des Anspruchs 1 gelöst. Der erfindungsgemäße Getränkespender mit einer Einrichtung zur Ermittlung eines Getränkefüllstandes umfasst demnach

- einen Getränkeauslass zur Abgabe eines Getränks in Schwerkraftrichtung entlang einer z-Achse eines kartesischen Koordinatensystems,
- eine horizontale Aufstellfläche, die unterhalb des Getränkeauslasses in einer x-y-Ebene des Koordinatensystems angeordnet ist,
- einen Sender, der in einer Projektionsrichtung eine Gerade in die x-y-Ebene der Aufstellfläche projiziert,
- einen Empfänger, der unter einem Winkel gegenüber der Projektionsrichtung auf die Aufstellfläche gerichtet ist und der aus einer Erfassungsrichtung Wiedergabeabschnitte derselben projizierten Geraden sowohl auf der Aufstellfläche als auch solche Wiedergabeabschnitte erfasst, die denen gegenüber in darüber liegenden, parallelen Ebenen um einen Abstand parallel verschoben erscheinen, und
- eine Auswerteeinheit, die den Abstand zwischen den vom Empfänger erfassten Wiedergabeabschnitten ermittelt und daraus einen Abstand zwischen den Ebenen in Richtung der z-Achse bestimmt.

Der erfindungsgemäße Getränkespender mit seiner Einrichtung zur Ermittlung des Getränkefüllstandes wendet sich also davon ab, in einer Tasse auf der Projektion einen Lichtpunkt zu projizieren und die Verschiebung des Lichtpunktes aufgrund eines steigenden Getränkefüllstands zu erfassen. Die Erfindung verfolgt vielmehr das Prinzip, eine Gerade in Richtung auf die Aufstellfläche und auf ein ggf. darauf abgestelltes Getränkegefäß zu projizieren. Die projizierte Gerade erzeugt auf der Aufstellfläche und ggf. auf dem Getränkegefäß Wiedergabeabschnitte. Sie sind jedenfalls auf der Aufstellfläche und dort gegebenenfalls beidseits eines darauf abgestellten Getränkegefäßes zu finden. Auf dem Getränkegefäß finden sie sich auf dessen Rand und auf dessen Behälterboden, sofern es keine Flüssigkeit enthält, bzw. auf dem Flüssigkeitsspiegel des Getränkegefäßes, sofern es gefüllt ist. Die Wiedergabeabschnitte der projizierten Geraden auf der Aufstellfläche und auf dem Getränkegefäß liegen folglich in unterschiedlichen, regelmäßig parallel zueinander liegenden Ebenen. Eine erste Ebene stellt diejenige der Aufstellfläche dar und weitere Ebenen diejenigen, in denen jeweils der Gefäßrand, der Behälterboden oder der Flüssigkeitsspiegel liegen. Aus der Projektionsrichtung selbst sind die Abstände zwischen den einzelnen Wiedergabeabschnitten optisch nicht ohne weiteres zu erfassen. Sobald jedoch die einzelnen Wiedergabeabschnitte unter einem Winkel gegenüber der Projektionsrichtung betrachtet werden, erscheinen die einzelnen Wiedergabeabschnitte auf der Aufstellfläche, auf dem Gefäßrand, auf dem Behälterboden oder auf dem Flüssigkeitsspiegel um gewisse Abstände zueinander verschoben. Idealerweise liegt der Winkel in einer Ebene, die sich orthogonal zu den Wiedergabeabschnitten der projizierten Gerade erstreckt. Mit einer entsprechend ausgerichteten Erfassungseinrichtung können sich die Wiedergabeabschnitte der Geraden und das Maß ihrer Abstände zueinander erfassen lassen. Eine Auswerteeinrichtung, die Bestandteil einer Steuereinrichtung des Getränkespenders sein kann, kann aus den erfassten Abständen und dem bekannten, i.d.R. konstanten, aber grundsätzlich auch veränderbaren Winkel der Erfassungsrichtung gegenüber der Projektionsrichtung einen Höhenunterschied in der z-Richtung errechnen. Damit kann beispielsweise der Abstand des Wiedergabeabschnitts des Behälterbodens gegenüber dem des Behälterrands erfasst werden, um eine Tiefe des Behälters zu bestimmen. Mit der Erfassung des Abstands des Wiedergabeabschnitts von demjenigen des Flüssigkeitsspiegels kann der Füllgrad des Getränkegefäßes ermittelt werden.

Die erfindungsgemäße Einrichtung erfordert also keinen sich verändernden Flüssigkeitsspiegel, um zu einem Ergebnis zu führen, sondern arbeitet auch "statisch". Damit eignet sie sich auch dazu, lediglich einen Ist- oder Zielzustand zu erfassen. Daher lässt sich die Einrichtung selbst schon vor einer Zubereitungsaktivität des Getränkespenders auf korrekte Funktion hin überprüfen.

Grundsätzlich können die Projektionsrichtung und die Erfassungsrichtung in einem beliebigen Winkel auf die x-y-Ebene der Aufstellfläche gerichtet sein. Ihre Neigung wird vor allem von einer guten Erfassungsmöglichkeit der Wiedergabeabschnitte bestimmt. Nach einer vorteilhaften Ausgestaltung der Erfindung kann die Projektionsrichtung des Senders der z-Achse und damit der vertikalen Richtung entsprechen, in der das Getränk in das Gefäß abgegeben wird, und die Erfassungsrichtung demgegenüber bzw. gegenüber der z-Achse in einem Winkel auf die x-y-Ebene der Aufstellfläche gerichtet sein. Alternativ ist auch eine umgekehrte Orientierung der Projektionsrichtung und der Erfassungsrichtung möglich. Jedenfalls lassen sich mit einer der beiden Richtungen parallel zur z-Achse entweder der Sender oder der Empfänger platzsparend und unauffällig im Getränkeauslass unterbringen.

Nach einer weiteren vorteilhaften Ausgestaltung der Erfindung kann der Sender eine parallel zur y-Achse verlaufende Gerade projizieren. Die Gerade verläuft dann parallel zu einer Front des Getränkespenders und bietet damit eine möglichst lange Erstreckung auf der Aufstellfläche. Von der Front des Getränkespenders aus kann sie sich sowohl gut projizieren als auch zuverlässig erfassen lassen. Die erfindungsgemäße Einrichtung bezieht damit ihre Zuverlässigkeit daraus, dass sie die vollständige Tassenaufstellfläche erfassen kann und damit weitgehend unabhängig von der Position eines Behälters auf der Aufstellfläche arbeitet. Ungeschicklichkeit eines Benutzers oder Bedienfehler dürften damit weitgehend ausgeschlossen sein.

Als Sender können grundsätzlich alle Projektoren zum Einsatz kommen, die eine für einen Empfänger erkennbare Gerade projizieren können. Nach einer vorteilhaften Ausgestaltung der Erfindung kann jedoch ein Laserprojektor als Sender angeordnet sein. Laserprojektoren verfügen über eine große Genauigkeit und liefern ein kontraststarkes Bild, so dass die Wiedergabeabschnitte der projizierten Geraden zuverlässig und genau erkannt werden können. Außerdem lassen sich Laserprojektoren aufgrund ihrer heute möglichen geringen Abmessungen problemlos selbst im Bereich des Getränkeauslasses an einem Getränkespender unterbringen.

Der Empfänger der erfindungsgemäßen Einrichtung wird vorteilhafterweise auf den Sender abgestimmt. Nach einer weiteren vorteilhaften Ausgestaltung der Erfindung kann eine CCD-Kamera als Empfänger angeordnet sein. Sie ermöglicht eine hochgenaue Erfassung der Wiedergabeabschnitte und der zwischen ihnen liegenden Verschiebungswerte. CCD-Kameras beruhen auf gleichnamigen Sensoren, sogenannten charge-coupled devices (ladungsgekoppelten Bauteilen). Derartige zweidimensionale Sensoren lassen sich so weit miniaturisieren, dass sie trotz ihrer geringen Abmessungen ein ausreichend aufgelöstes Bild aufnehmen.

Nach einer weiteren vorteilhaften Ausgestaltung der Erfindung können der Sender und der Empfänger auf eine Verarbeitung von Laserstrahlung in einem für den Menschen nicht sichtbaren Bereich ausgelegt sein. Damit bleibt die Projektion der Geraden für einen Benutzer unsichtbar, so dass der Erfassungsvorgang vom Benutzer unbemerkt erfolgen kann. Bewusste Manipulationen während des Getränkebezugs sind damit ausgeschlossen.

Die Erfassung eines Füllstandes bedeutet oftmals den Abstand eines Flüssigkeitsspiegels von einem Behälterboden, der in einer Näherung mit der Aufstellfläche gleichgesetzt werden kann. Nach einer vorteilhaften Ausgestaltung der Erfindung kann die Auswerteeinheit den Abstand zwischen einem ersten Wiedergabeabschnitt auf dem Flüssigkeitsspiegel in einem Gefäß und einem zweiten Wiedergabeabschnitt auf der Aufstellfläche anhand des Zusammenhangs

$$\Delta z = \Delta e \,/\, \sin(\varphi)$$

bestimmen, wenn die Projektionsrichtung auf der z-Achse liegt. Der Abstand zwischen den beiden Ebenen, nämlich zwischen der Ebene der Aufstellfläche und der Ebene, in der sich der Flüssigkeitsspiegel erstreckt, ist der gesuchte Wert $\Delta z$. Er bestimmt sich aus dem Abstand $\Delta e$, den die beiden Wiedergabeabschnitte derselben Geraden auf der Abstellfläche einerseits und auf dem Flüssigkeitsspiegel andererseits aus der Erfassungsrichtung betrachtet zueinander einnehmen. Da der Neigungswinkel $\varphi$ der Erfassungsrichtung gegenüber der Projektionsrichtung, also der z-Achse, bekannt ist, kann die Auswerteeinheit aus dem Quotienten aus dem Wert für den erfassten Abstand $\Delta e$ der Wiedergabeabschnitte und dem Sinus des Neigungswinkels $\varphi$ der Empfangseinrichtung den Höhenabstand $\Delta z$ zwischen der Aufstellfläche und dem Flüssigkeitsspiegel errechnen. Bei Kenntnis der Abmessungen des Getränkegefäßes, beispielsweise wenn der Getränkespender Getränkegefäße zum Bezug zur Verfügung stellt, lässt sich aus der Flüssigkeitshöhe sogar das tatsächlich abgegebene Volumen errechnen.

Bei wechselnden oder unbekannten Gefäßen dagegen lässt sich das Getränkevolumen bestenfalls abschätzen. Die erfindungsgemäße Einrichtung kann hier allerdings dazu dienen, auch ohne Kenntnis des Gefäßvolumens ein Überbefüllen bzw. Überlaufen des Getränkegefäßes zu vermeiden. Denn nach einer weiteren vorteilhaften Ausgestaltung der Erfindung kann die Auswerteeinheit dazu eingerichtet sein, den Abstand des ersten Wiedergabeabschnitts auf einem Flüssigkeitsspiegel in einem Gefäß, das auf der Aufstellfläche abgestellt ist, gegenüber einem zweiten Wiedergabeabschnitt auf einem Rand des Gefäßes zu bestimmen. Als Bezugshöhe dient folglich nicht die Aufstellfläche, weil sich ohne zusätzliche Kenntnis einer weiteren Abmessung des Getränkebehälters dessen Volumen nicht bestimmen lässt. Um ein Überlaufen des Gefäßes zu vermeiden, genügt es dagegen, dessen Getränkerand zu erfassen und demgegenüber den Flüssigkeitsspiegel zu detektieren. Nach dem oben beschriebenen Prinzip bzw. nach der dortigen Berechnungsmethode lässt sich erfindungsgemäß auch das sogenannte Freibord, also der Abstand $\Delta z$ zwischen dem Flüssigkeitsspiegel und dem Gefäßrand, ermitteln. Die Kenntnis dieses Abstands erlaubt es, einen erfolgreichen Getränkebezug zuverlässiger zu gestalten. So kann von einer einmaligen Erfassung des Freibords während des Getränkebezugs und aus der bis dahin abgegebenen Getränkemenge pro Zeit auf ein verbleibendes Volumen des Getränkegefäßes und so auf einen möglichen Rest an Getränk geschlossen werden, der noch abgegeben werden kann.

Der erfindungsgemäße Getränkespender bzw. die erfindungsgemäße Einrichtung dient also der zuverlässigen Bestimmung eines Flüssigkeitsspiegels in einem bzw. relativ zu einem Getränkegefäß. Nach einer weiteren vorteilhaften Ausgestaltung der Erfindung kann die Steuereinrichtung des Getränkespenders in Abhängigkeit des bestimmten Abstandes $\Delta z$ die Ausgabe des Fluids steuern. Erfindungsgemäß kann also die Erfassung des Flüssigkeitsspiegels relativ zur Aufstandsfläche oder relativ zum Getränkegefäßrand kontinuierlich erfolgen. Sobald die Gefahr eines Überlaufens des Gefäßes besteht, kann der Getränkespender selbsttätig abschalten.

Nach einer weiteren vorteilhaften Ausgestaltung der Erfindung kann die Steuereinheit dazu eingerichtet sein, den Abstand zwischen dem ersten und dem zweiten Wiedergabeabschnitt kontinuierlich zu erfassen und die Befüllung des Gefäßes mit dem Fluid zu stoppen, wenn ein vorbestimmter Abstand zwischen den Wiedergabeabschnitten erreicht ist. Der vorbestimmte Abstand kann entweder eine gewünschte Flüssigkeitshöhe gegenüber dem Behälterboden bzw. der Aufstandsfläche sein, wenn die Auswerte- oder Steuereinheit weitere Abmessungen des Getränkegefäßes verarbeiten und auf dessen Volumen schließen kann. Ist dies nicht der Fall, so kann der vorbestimmte Abstand ein oben bereits erläutertes Freibord sein, also der Abstand zwischen dem Flüssigkeitsspiegel einerseits und dem Rand des Getränkebehälters andererseits. Erfindungsgemäß überwacht also der Getränkespender bzw. die Steuereinrichtung selbsttätig, ob eine Gefahr des Überlaufens besteht. Bleibt bei Abgabe des Getränks der Flüssigkeitsspiegel aufgrund der vordefinierten Getränkemenge unterhalb des vorbestimmten Abstands, so schaltet der Getränkespender ohnehin die weitere Getränkeabgabe ab. Unterschreitet der Flüssigkeitsspiegel jedoch bei einer vorbestimmten Getränkemenge einen vorbestimmten Mindestabstand bzw. das Freibord, so schaltet die Steuereinrichtung den Getränkebezug ab, um ein Überlaufen zu vermeiden. Damit kann ein Getränkebezug auch dann erfolgreich ablaufen, wenn dem Getränkespender die Abmessungen des zu befüllenden Getränkegefäßes nicht bekannt sind. Ein derartiger Getränkespender bietet folglich dem Benutzer maximalen Komfort.

Die eingangs genannte Aufgabe wird außerdem durch ein Verfahren zum Betreiben eines Getränkespenders mit einem Getränkeauslass zur Abgabe eines Getränks in Schwerkraftrichtung entlang einer z-Achse eines kartesischen Koordinatensystems, mit einer horizontalen Aufstellfläche unter dem Getränkeauslass in einer x-y-Ebene des Koordinatensystems und mit einem Sender, einem Empfänger und einer Auswerteeinheit, mit den folgenden Schritten gelöst:

a) Projizieren einer Geraden in einer Projektionsrichtung in die x-y-Ebene der Aufstellfläche,
b) Erfassen sowohl eines ersten Wiedergabeabschnitts der Geraden als auch dessen parallel verschobenen zweiten Wiedergabeabschnitts aus einer Erfassungsrichtung, wenn ein Gefäß auf der Aufstellfläche steht, unter einem Winkel gegenüber der Projektionsrichtung, und
c) Ermitteln eines Abstands zwischen den Wiedergabeabschnitten und Bestimmen eines Abstands zwischen den Wiedergabeabschnitten in Richtung der z-Achse.

Das erfindungsgemäße Verfahren beruht also darauf, auf ein Getränkegefäß eine Gerade aus einer ersten Richtung zu projizieren und ihre Wiedergabeabschnitte aus einer zweiten, von der ersten verschiedenen Richtung zu erfassen. Aus der Kenntnis eines zwischen der Projektions- und der Erfassungsrichtung liegenden Winkels einerseits und aus dem Abstand der Wiedergabeabschnitte orthogonal zur Erfassungsrichtung lässt sich der Abstand der zugehörigen horizontalen Ebenen, in denen die Wiedergabeabschnitte liegen, errechnen. Diese Methode bietet die oben bereits erläuterten Vorteile.

Dieses Verfahren lässt sich vorteilhaft weiterbilden, indem die Verfahrensschritte des Erfassens der Wiedergabeabschnitte und des Ermittelns des Abstands zwischen ihnen bzw. ihren Ebenen während der Abgabe eines Getränkes wiederholt hintereinander durchgeführt werden, bis der errechnete Abstand einen vorbestimmten Mindestabstand erreicht und dann in einem darauffolgenden Schritt die Getränkeabgabe beendet wird. Damit ist eine kontinuierliche Überwachung des Füllstands möglich und ein Überfüllen bzw. Überlaufen des Getränkegefäßes ausgeschlossen.

Das Prinzip der Erfindung wird nachfolgend anhand einer Zeichnung beispielshalber noch näher erläutert. In der Zeichnung zeigen:

Figur 1:     eine schematische Ausschnittsansicht eines erfindungsgemäßen Getränkespenders in einer Seitenansicht,
Figur 2:     eine Prinzipdarstellung einer Kameraansicht,
Figur 3:     eine Kameraansicht eines Getränkegefäßes auf einer Aufstellfläche,
Figur 4:     ein Ablaufdiagramm des erfindungsgemäßen Verfahrens.

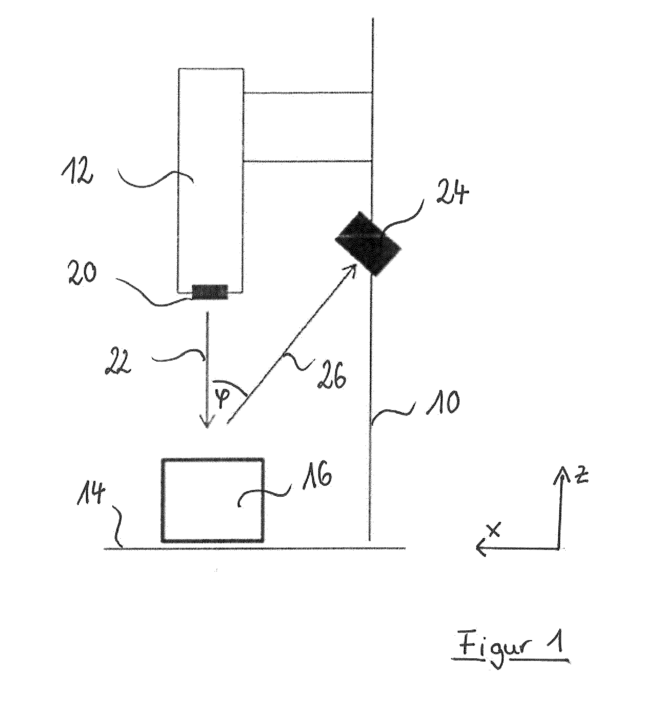

Die Seitenansicht der Figur 1 auf einen Ausschnitt eines erfindungsgemäßen Getränkespenders zeigt eine Gerätefront 10, an der eine Abgabevorrichtung 12 für Getränke auskragt. Sie ragt über eine Tassenaufstellfläche 14, auf der ein stilisiertes Getränkegefäß 16 abgestellt ist. Die Abgabevorrichtung 12 gibt im Betrieb ein Getränk der Schwerkraftrichtung folgend und damit entlang einer z-Achse eines kartesischen Koordinatensystems in das Getränkegefäß 16 ab. Die Tassenaufstellfläche 14 erstreckt sich demzufolge in ihrer sichtbaren Breite in Richtung der x-Achse, die Blickrichtung folgt der y-Achse des Koordinatensystems.

Erfindungsgemäß ist an der Abgabevorrichtung 12 ein Laserprojektor als Sender 20 angebracht, der eine Gerade in einer Projektionsrichtung 22 auf die Abstellfläche 14 hin und damit auch auf das Getränkegefäß 16 abgibt. Die Projektionsrichtung 22 verläuft parallel zur z-Achse. An der Gerätefront 10 ist ein Empfänger 24 angebracht, der unter einem Winkel $\varphi$ gegenüber der z-Achse bzw. der Projektionsrichtung 22 auf die Abstellfläche 14 und damit auf das Getränkegefäß 16 gerichtet ist. Seine Erfassungsrichtung 26 schließt folglich mit der Projektionsrichtung 22 den Winkel $\varphi$ ein. Da der Empfänger 24 nicht unmittelbar unter dem Getränkeauslauf 12 angeordnet ist, wird seine Erfassung auch kaum durch aufsteigenden Dampf von Heißgetränken beeinträchtigt.

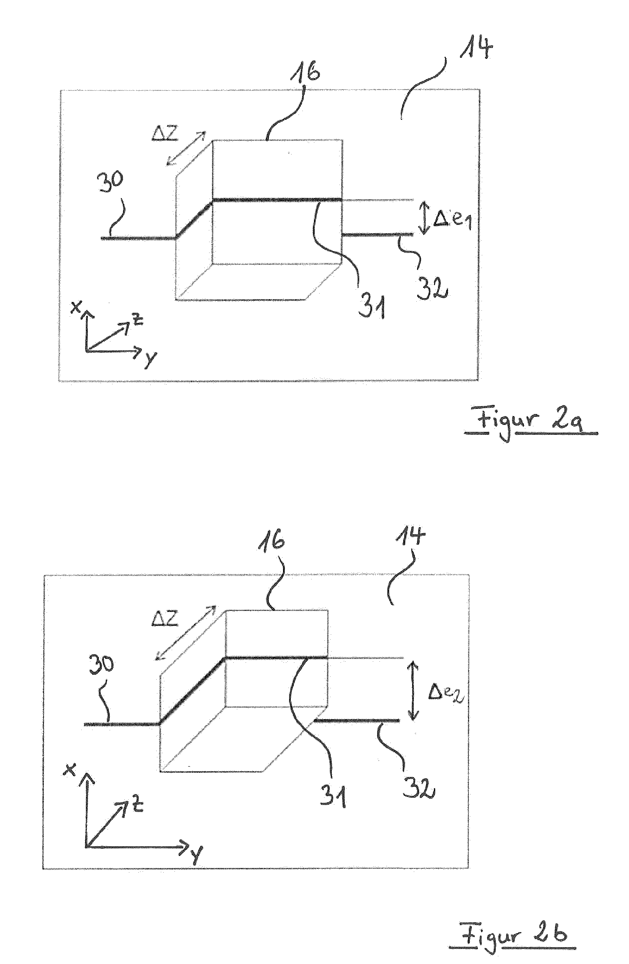

Die Figuren 2a und 2b bieten eine stilisierte Ansicht aus der Perspektive des Empfängers 24, also in Erfassungsrichtung 26: Auf der Aufstellfläche 14 ist der stilisierte Getränkebehälter 16 als Kubus zu erkennen. Der Sender 20 (Figur 1) projiziert eine Gerade, die in y-Richtung verläuft, auf die Aufstellfläche 14 bzw. auf das Getränkegefäß 16. Sie zeigt sich als drei Wiedergabeabschnitte 30, 31, 32, die ebenfalls in y-Richtung verlaufen. Die Wiedergabeabschnitte 30, 32 liegen auf der Aufstellfläche 14, der Wiedergabeabschnitt 31 befindet sich auf dem Getränkegefäß 16. Die Wiedergabeabschnitte 30, 32 einerseits und der Wiedergabeabschnitt 31 liegen, in Richtung der z-Achse betrachtet, in unterschiedlichen Höhen und haben in dieser Richtung untereinander den gesuchten Abstand $\Delta z$.

Aus seiner Perspektive kann der Empfänger 24 die wahre Größe für den Abstand $\Delta z$ nicht erfassen. Ihm gegenüber jedoch erscheinen die Wiedergabeabschnitte 30, 32 gegenüber dem Wiedergabeabschnitt 31 in einem Abstand $\Delta e_i$ (Figur 2a) bzw. um das Maß $\Delta e_2$ (Figur 2b) verschoben. Der Abstand $\Delta e$ ist - wie der gesuchte Abstand $\Delta z$ - umso größer, je höher das Getränkegefäß 16 ist (vgl. Figur 2b).

Eine nicht dargestellte Auswerteeinheit des Getränkespenders kann nun aus dem bekannten Winkel $\varphi$ und dem vom Empfänger 24 erfassten Abstand $\Delta e$ den gesuchten Abstand $\Delta z$ als

$$\Delta z = \Delta e \, / \sin(\varphi)$$

ermitteln.

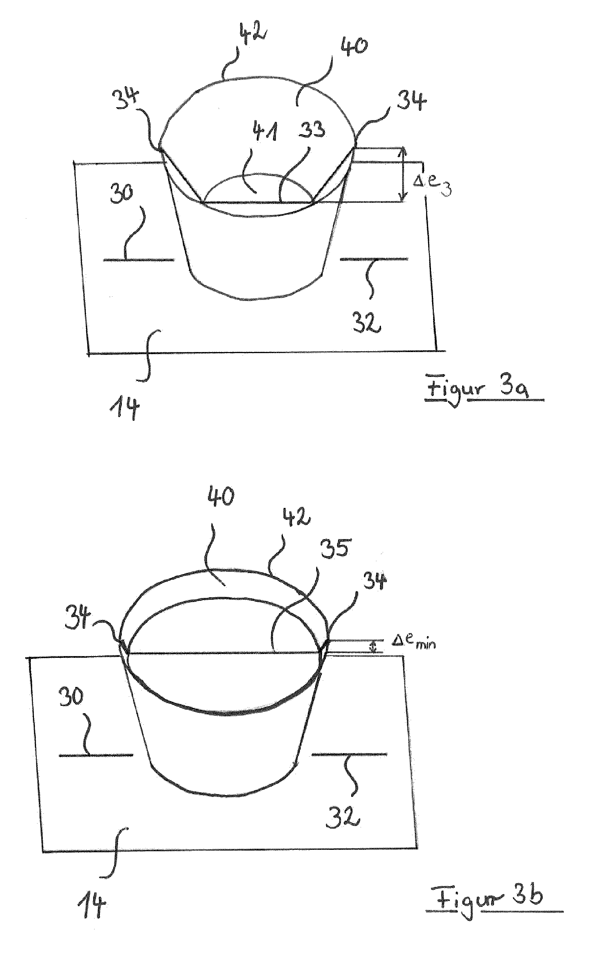

Die Figuren 3a und 3b zeigen eine Tasse 40 auf der Aufstellfläche 14 aus der Perspektive des Empfängers 24: Die projizierte Gerade des Laserprojektors 20 (Figur 1) erzeugt den Wiedergabeabschnitt 30 auf der Aufstellfläche 14, einen Wiedergabeabschnitt 33 auf einem Boden 41 der Tasse 40 und zwei punktuelle Wiedergabeabschnitte 34 jeweils auf dem Rand 42 der Tasse 40. Die Höhe der Tasse 40, also sowohl der Abstand zwischen der Aufstellfläche 14 und ihrem Tassenrand 42 als auch die Tiefe der Tasse 40 zwischen ihrem Boden 41 und dem Tassenrand 42, lassen sich erfindungsgemäß mittels des Empfängers 24 bestimmen. Die Tiefe der Tasse 40 lässt sich aufgrund des Abstands $\Delta e_3$ zwischen der Wiedergabe 33 und 34 aus dem oben genannten geometrischen Zusammenhang errechnen.

In prinzipiell gleicher Weise lässt sich auch der Füllstand der Tasse 40 ermitteln, wie Figur 3b veranschaulicht: Die projizierte Gerade des Senders 20 (Figur 1) führt wiederum zu zwei Wiedergabeabschnitten 30, 32 auf der Aufstellfläche 14, zu zwei punktuellen Wiedergabeabschnitten 34 auf dem Tassenrand 42 und zu einem linienhaften Wiedergabeabschnitt 35 auf dem Flüssigkeitsspiegel. Prinzipiell könnte die Höhe des Flüssigkeitsspiegels aus einem erfassten Abstand zwischen den Wiedergabeabschnitten 30 und 35 ermittelt werden. Alternativ kann jedoch, wie in Figur 3b gezeigt, der Flüssigkeitsspiegel auch anhand des Abstands zwischen dem Wiedergabeabschnitt 35 und den Wiedergabeabschnitten 34 errechnet werden. Die beiden Wiedergabeabschnitte 34 auf dem Tassenrand 42 können im Bild des Empfängers 24 durch Ermittlung der Bildkoordinaten mit den höchsten z-Werten erkannt werden. Dafür wird jeder Pixel eines erfassten Bildes des Empfängers 24 abgefragt, ob die Laserlichtfrequenz erkannt wurde. Sollte dies der Fall sein, so wird der Zähler für diesen z-Wert um 1 erhöht. Es wird also die Anzahl der vorkommenden z-Werte gezählt. Zum einen stellt der höchste vorkommende z-Wert einen der Wiedergabeabschnitte 34 als Repräsentant der Tassenhöhe dar, zum anderen stellen hohe Anzahlen an gleichen z-Werten die waagrechten Widergabeabschnitte 30, 31, 32, 33 und 35 dar. Da die Höhe der Aufstellfläche 14 bekannt ist, können die Wiedergabeabschnitte 30, 32 ihr zugeordnet werden. Damit verbleibt als relevanter Wiedergabeabschnitt der Wiedergabeabschnitt 35 als Repräsentant des Flüssigkeitsstands.

Dieses Ermittlungsverfahren mit der Erfassung des Wiedergabeabschnitts 35 als Flüssigkeitsstand eignet sich auch für eine kontinuierliche Durchführung. Bei der Zubereitung eines Getränks kann der Flüssigkeitsstand kurz nach Start der Getränkeabgabe erfasst werden und kontinuierlich der schrumpfenden Abstand $\Delta e_3$ zwischen dem Wiedergabeabschnitt 35 und den beiden Wiedergabeabschnitten 34 ermittelt werden. In der Steuereinheit des Getränkebereiters kann ein Mindestwert $\Delta e_{min}$ für den minimalen Abstand des Flüssigkeitsspiegels vom Tassenrand 42 aus der Perspektive des Empfängers 24 hinterlegt sein. $\Delta e_{min}$ ist einem Mindestabstand $\Delta z_{min}$ (nicht gezeigt) eines Flüssigkeitsspiegels von einem Tassenrand in z-Richtung zugeordnet. Durch die kontinuierliche Erfassung des Flüssigkeitsspiegels ist es möglich, den Getränkebereiter bzw. die Abgabe eines Getränkes zu stoppen, sobald der Abstand $\Delta e_3$ zwischen der Höhe des Flüssigkeitspegels und dem Tassenrand 42 den Wert $\Delta e_{min}$ erreicht hat. Damit kann ein Überlaufen eines Getränkegefäßes zuverlässig verhindert werden.

Schließlich kann ein Laserlicht außerhalb des menschlichen Sehspektrums verwendet werden, so dass für den Benutzer die Wiedergabeabschnitte 30, 31, 32, 33, 34, 35 nicht sichtbar sind. Damit können Manipulationen des Erfassungsvorgangs vermieden werden, weil er für den Benutzer unbemerkt erfolgt.

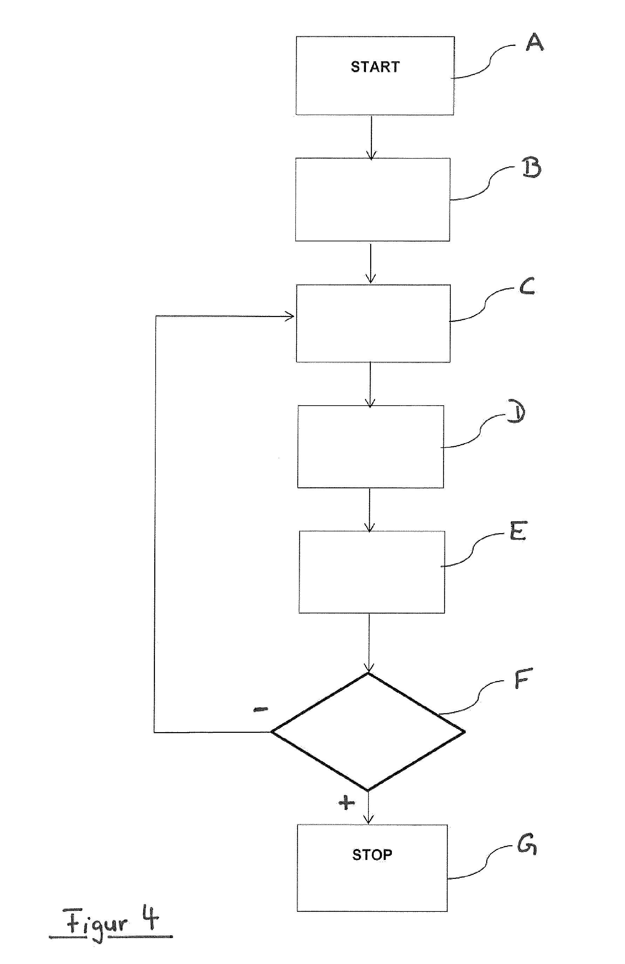

Figur 4 zeigt den Verfahrensablauf eines erfinderischen Verfahrens zur Bestimmung eines Flüssigkeitsspiegels: In einem Startschritt A kann der Getränkebereiter eingeschaltet, gegebenenfalls eine Funktionsüberprüfung und/oder Kalibrierung der erfindungsgemäßen Einrichtung durchgeführt, die Getränkezubereitung bereits gestartet oder eventuell auch eine Mindestmenge bereits in das Getränkegefäß abgegeben worden sein. In einem anschließenden Schritt B jedenfalls projiziert der Sender 20 (vgl. Figur 1) eine Gerade in der Projektionsrichtung 22 auf die Aufstellfläche 14 hin und damit auf ein darauf abgestelltes Getränkegefäß 16. In einem anschließenden Schritt C erfasst der Empfänger 24 die Wiedergabeabschnitte, die sich jedenfalls auf dem Getränkegefäß 16 zeigen. Sie erfasst also zumindest die Wiedergabeabschnitte 34 auf einem Tassenrand 42 und je nach Definition des Startschritts A einen Wiedergabeabschnitt 33 auf dem Tassenboden oder bereits den Wiedergabeabschnitt 35 auf einem Flüssigkeitsspiegel. Da die Erfassungsrichtung 26 des Empfängers 24 gegenüber der Projektionsrichtung 22 geneigt ist, ermittelt eine Auswerteeinheit daraus in einem Schritt D einen Abstand $\Delta e$ der Wiedergabeabschnitte voneinander. In einem anschließenden Schritt E bildet sie eine Differenz $\Delta = \Delta e - \Delta e_{min}$. $\Delta e_{min}$ ist in der Steuerungseinrichtung als vordefinierter Wert enthalten und ist der orthogonal zur Erfassungsrichtung erfasste Mindestabstand, der einem Mindestabstand $\Delta z_{min}$ eines Flüssigkeitsspiegels von einem Tassenrand in z-Richtung entspricht. In einem anschließenden Schritt F lässt die Steuereinrichtung das Verfahren mit dem Schritt C fortsetzen, sofern $\Delta > 0$ ist. Ist der Wert $\Delta \leq 0$, so stoppt die Steuereinrichtung im Schritt G den Getränkespender und damit die Getränkeabgabe.

Da es sich bei dem vorhergehend detailliert beschriebenen Getränkespender und dem Verfahren zu seinem Betrieb jeweils um Ausführungsbeispiele handelt, können sie in üblicher Weise vom Fachmann in einem weiten Umfang modifiziert werden, ohne den Bereich der Erfindung zu verlassen. Insbesondere kann auch die konkrete Anordnung des Senders und des Empfängers in anderer Form als in der hier beschriebenen erfolgen. Ebenso kann auch der Getränkeauslass in einer anderen Form ausgestaltet werden, wenn dies aus Platzgründen bzw. designerischen Gründen notwendig ist. Weiter schließt die Verwendung der unbestimmten Artikel "ein" bzw. "eine" nicht aus, dass die betreffenden Merkmale auch mehrmals oder mehrfach vorhanden sein können.

Bezugszeichenliste

| | |
|---|---|
| 10 | Gerätefront |
| 12 | Abgabevorrichtung |
| 14 | Aufstellfläche |
| 16 | Getränkegefäß |
| 20 | Sender |
| 22 | Projektionsrichtung |
| 24 | Empfänger |
| 26 | Erfassungsrichtung |
| 30, 31, 32, 33, 34,35 | Wiedergabeabschnitte |
| 40 | Tasse |
| 41 | Tassenboden |

| 42 | Tassenrand |
|---|---|

| $\varphi$ | Winkel zwischen der Projektionsrichtung 22 und der Erfassungsrichtung 26 |
|---|---|
| $\Delta z$ | Abstand in Richtung der z-Achse |
| $\Delta e, \Delta e_1, \Delta e_2$ | Abstände in einer Richtung orthogonal zur Erfassungsrichtung |
| $\Delta e_{min}$ | gespeicherter Mindestabstand in einer Richtung orthogonal zur Erfassungsrichtung |

| A-G | Verfahrensschritte |
|---|---|

**Patentansprüche**

1. Getränkespender mit einer Einrichtung zur Ermittlung eines Getränkefüllstands,

   - mit einem Getränkeauslass (12) zur Abgabe eines Getränks in Schwerkraftrichtung entlang einer z-Achse eines kartesischen Koordinatensystems,
   - mit einer horizontalen Aufstellfläche (14), die unterhalb des Getränkeauslasses (12) in einer x-y-Ebene des Koordinatensystems angeordnet ist,
   - mit einem Sender (20), der in einer Projektionsrichtung (22) eine Gerade in die x-y-Ebene der Aufstellfläche (14) projiziert,
   - mit einem Empfänger (24), der unter einem Winkel ($\varphi$) gegenüber der Projektionsrichtung (22) auf die Aufstellfläche (14) gerichtet ist und der Wiedergabeabschnitte (30; 32) derselben projizierten Gerade sowohl auf der Aufstellfläche (14) als auch solche Wiedergabeabschnitte (31; 33; 34; 35) erfasst, die denen gegenüber in darüber liegenden parallelen Ebenen um einen Abstand ($\Delta e$) parallel verschoben erscheinen, und
   - mit einer Auswerteeinheit, die den Abstand ($\Delta e$) zwischen den von dem Empfänger (20) erfassten Wiedergabeabschnitten (30; 31; 32; 33; 34; 35) ermittelt und daraus einen Abstand ($\Delta z$) zwischen den Ebenen in Richtung der z-Achse bestimmt.

2. Getränkespender gemäß Anspruch 1, **dadurch gekennzeichnet, dass** der Sender (20) eine Gerade in z-Richtung projiziert und der Empfänger (24) unter einem in der x-z-Ebene liegenden Winkel ($\varphi$) gegenüber der z-Achse auf die Aufstellfläche (14) gerichtet ist.

3. Getränkespender nach Anspruch 1 oder 2, **dadurch gekennzeichnet, dass** der Sender (20) eine parallel zur y-Achse verlaufende Gerade projiziert.

4. Getränkespender nach einem der Ansprüche 2 oder 3, wobei die Auswerteeinheit dazu eingerichtet ist, den Abstand ($\Delta z$) zwischen einem ersten Wiedergabeabschnitt (35) auf dem Flüssigkeitsspiegel in einem Gefäß (40) und einem zweiten Wiedergabeabschnitt (30; 32) auf der Aufstellfläche (14) anhand des Zusammenhangs

$$\Delta z = \Delta e / \sin \varphi$$

   zu bestimmen.

5. Getränkespender gemäß einem der Ansprüche 1 bis 2, mit einem Laserprojektor (20) als Sender und/oder mit einer CCD-Kamera (24) als Empfänger.

6. Getränkespender gemäß einem der Ansprüche 2 bis 4, wobei die Auswerteeinheit dazu eingerichtet ist, den Abstand ($\Delta z$) des ersten Wiedergabeabschnitts (35) auf einem Flüssigkeitsspiegel in einem Gefäß (40) gegenüber einem zweiten Wiedergabeabschnitt (34) auf einem Rand (42) des Gefäßes (40) zu bestimmen.

7. Getränkespender gemäß einem der Ansprüche 1 bis 5, wobei eine Steuereinheit in Abhängigkeit des Abstands ($\Delta z$) die Ausgabe des Fluids steuert.

8. Getränkespender gemäß Anspruch 2 bis 6, wobei die Steuereinheit dazu eingerichtet ist, den Abstand ($\Delta z$) zwischen dem ersten und dem zweiten Wiedergabeabschnitt kontinuierlich zu erfassen und die Befüllung des Gefäßes (40) mit dem Fluid zu stoppen, wenn ein vorbestimmter Abstand erreicht ist.

**9.** Verfahren zum Betreiben eines Getränkespenders mit einem Getränkeauslass (12) zur Abgabe eines Getränks in Schwerkraftrichtung entlang einer z-Achse eines kartesischen Koordinatensystems, mit einer horizontalen Aufstellfläche (14) unter dem Getränkeauslass (12) in einer x-y-Ebene des Koordinatensystems, und mit einem Sender (20), einem Empfänger (24) und einer Auswerteeinheit, mit den folgenden Schritten:

a) Projizieren einer Geraden in einer Projektionsrichtung (22) in die x-y-Ebene der Aufstellfläche (14),
b) Erfassen sowohl eines ersten Wiedergabeabschnitts (30; 32; 34) der Geraden als auch dessen parallel verschobenen zweiten Wiedergabeabschnitts (31; 33; 35), wenn ein Gefäß (16; 40) auf der Aufstellfläche (14) steht, unter einem Winkel ($\varphi$) gegenüber der Projektionsrichtung (22), und
c) Ermitteln eines Abstands ($\Delta e$) zwischen den Wiedergabeabschnitten (30; 32; 34; 31; 33; 35) und Bestimmen eines Abstands ($\Delta z$) zwischen den Wiedergabeabschnitten (30; 32; 34; 31; 33; 35) in Richtung der z-Achse.

**10.** Verfahren nach dem obigen Verfahrensanspruch, **dadurch gekennzeichnet, dass** die Schritte b) und c) während der Abgabe eines Getränks wiederholt hintereinander durchgeführt werden, bis der Abstand ($\Delta z$) einen vorbestimmten Abstand erreicht, und in einem darauf folgenden Schritt d) die Getränkeabgabe beendet wird.

Figur 1

Figur 2a

Figur 2b

42  40

34  41  33  34

$\Delta e_3$

30

32

Figur 3a

14

40  42  35

34  34

$\Delta e_{min}$

30

32

Figur 3b

14

Figur 4

Europäisches Patentamt
European Patent Office
Office européen des brevets

# EUROPÄISCHER RECHERCHENBERICHT

**Nummer der Anmeldung**

EP 15 18 2651

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2006/063645 A1 (NESTEC SA [CH]; OZANNE MATTHIEU [CH]; KOLLEP ALEXANDRE [CH]; PIGUET RA) 22. Juni 2006 (2006-06-22) * Seite 16, Zeile 33 - Seite 20, Zeile 3; Abbildungen 1, 3 * ----- | 1-10 | INV. G01F23/292 |
| Y | DE 10 2007 063041 A1 (FRAUNHOFER GES FORSCHUNG [DE]) 2. Juli 2009 (2009-07-02) * Absätze [0002], [0038] - [0040]; Abbildungen 2, 3 * ----- | 1-10 | |
| A | US 6 617 601 B1 (WIKLUND PETER [SE]) 9. September 2003 (2003-09-09) * Abbildung 2A * ----- | 1-10 | |
| A | DE 10 2005 058873 A1 (FRAUNHOFER GES FORSCHUNG [DE]) 14. Juni 2007 (2007-06-14) * Abbildung 1 * ----- | 1-10 | |

**RECHERCHIERTE SACHGEBIETE (IPC)**

G01F
B67D

Der vorliegende Recherchenbericht wurde für alle Patentansprüche erstellt

| Recherchenort | Abschlußdatum der Recherche | Prüfer |
|---|---|---|
| Den Haag | 14. Januar 2016 | Nierhaus, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 18 2651

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-01-2016

| Im Recherchenbericht angeführtes Patentdokument | Datum der Veröffentlichung | Mitglied(er) der Patentfamilie | Datum der Veröffentlichung |
|---|---|---|---|
| WO 2006063645 A1 | 22-06-2006 | AT 407911 T | 15-09-2008 |
| | | AT 539998 T | 15-01-2012 |
| | | AU 2005316005 A1 | 22-06-2006 |
| | | BR PI0518604 A2 | 25-11-2008 |
| | | CA 2590304 A1 | 22-06-2006 |
| | | CN 101115674 A | 30-01-2008 |
| | | CN 102556924 A | 11-07-2012 |
| | | EP 1833750 A1 | 19-09-2007 |
| | | EP 1980525 A2 | 15-10-2008 |
| | | EP 2281773 A1 | 09-02-2011 |
| | | ES 2314727 T3 | 16-03-2009 |
| | | ES 2378650 T3 | 16-04-2012 |
| | | HK 1112223 A1 | 20-02-2009 |
| | | HK 1152926 A1 | 03-08-2012 |
| | | JP 4948419 B2 | 06-06-2012 |
| | | JP 2008523518 A | 03-07-2008 |
| | | RU 2385286 C2 | 27-03-2010 |
| | | TW I386871 B | 21-02-2013 |
| | | US 2007267098 A1 | 22-11-2007 |
| | | US 2009173409 A1 | 09-07-2009 |
| | | US 2010236660 A1 | 23-09-2010 |
| | | WO 2006063645 A1 | 22-06-2006 |
| DE 102007063041 A1 | 02-07-2009 | KEINE | |
| US 6617601 B1 | 09-09-2003 | US 6617601 B1 | 09-09-2003 |
| | | US 2004045694 A1 | 11-03-2004 |
| DE 102005058873 A1 | 14-06-2007 | CA 2632724 A1 | 14-06-2007 |
| | | DE 102005058873 A1 | 14-06-2007 |
| | | EP 1957935 A1 | 20-08-2008 |
| | | US 2008273211 A1 | 06-11-2008 |
| | | WO 2007065704 A1 | 14-06-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2281773 B1